# FASCICULE DE BREVET EUROPEEN

(11) **EP 2 540 162 B1**
(45) Date de publication et mention de la délivrance du brevet: **10.07.2013**
(21) Numéro de dépôt: 12173907.2
(22) Date de dépôt: 27.06.2012
(51) Int. Cl.: A01M 21/04

(54) **Appareil, ensemble et procédé de désherbage manuel et localisé**
Gerät, Einheit und Verfahren zur manuellen und lokalisierten Unkrautbekämpfung
Apparatus, assembly and method for manual and localised weeding

(30) Priorité: 01.07.2011 FR 1155977
(43) Date de publication de la demande: 02.01.2013
(73) Titulaire: EXEL INDUSTRIES, 51200 Epernay (FR)
(72) Inventeur: Ballu, Patrick, 51100 Reims (FR)
(74) Mandataire: Myon, Gérard Jean-Pierre

(56) Documents cités:
- WO-A1-91/14363
- GB-A- 2 278 988
- US-A- 6 029 589

## Description

La présente invention concerne un appareil de désherbage manuel et localisé pour le traitement de mauvaises herbes, ainsi qu'un ensemble de désherbage comprenant un tel appareil. Enfin, l'invention concerne un procédé de désherbage manuel et localisé.

On connait des appareils de désherbage se présentant sous la forme d'une canne et comprenant un réservoir tubulaire apte à recevoir un liquide phytosanitaire qui est pulvérisé sur les plantes à détruire. Ces appareils sont peu économiques et peu écologiques puisqu'un liquide phytosanitaire est nécessaire pour détruire les mauvaises herbes.

En alternative, il existe des appareils thermiques à gaz qui doivent être raccordés à une cartouche ou une bouteille de gaz butane ou propane. Un détendeur est raccordé à la bouteille de gaz. Le gaz est enflammé de manière à brûler les plantes indésirables. Ces appareils sont peu économiques et peu écologiques car ils nécessitent un apport en gaz. De plus, compte tenu de l'utilisation de gaz et de la présence de flamme, ils sont dangereux. En outre, ces appareils doivent être manipulés pour les raccorder à la cartouche ou à la bouteille de gaz, ce qui est peu commode et peut être dangereux en cas de mauvaise manipulation.

On connait également des appareils à vapeur qui détruisent les mauvaises herbes grâce à la chaleur de la vapeur d'eau. Ces appareils ont un temps de chauffe relativement important, ce qui est peu pratique.

WO-A-91/14363 divulgue un appareil de désherbage manuel et localisé pour le traitement de mauvaises herbes comprenant un générateur thermique fixé à une canne. Le générateur thermique comprend un ventilateur et une résistance chauffante qui projettent un jet d'air chaud dans un volume intérieur d'une cloche. Le choc thermique produit par le jet d'air chaud détruit les mauvaises herbes. Aucune disposition n'est prévue pour la gestion du jet d'air chaud, une fois que ce dernier a détruit la mauvaise herbe. Par conséquent, le jet d'air chaud a tendance à s'échapper de la cloche soit par le bord libre, détériorant ainsi les plantes avoisinantes, soit en remontant vers le générateur thermique, ce qui génère une surchauffe risquant d'endommager l'appareil.

C'est à ces inconvénients qu'entend plus particulièrement remédier l'invention en proposant un appareil de désherbage manuel et localisé efficace et précis, pratique, respectueux de l'environnement, dont la sécurité d'utilisation est optimale et qui est économique.

A cet effet, l'invention selon la revendication 1 à pour objet un appareil de désherbage manuel et localisé, comprenant une canne. Selon l'invention, l'appareil comprend
- un générateur thermique qui est fixé à la canne et qui comprend un ventilateur et une résistance chauffante,
- une cloche pourvue d'un bord libre pour l'appui de l'appareil sur le sol et d'au moins un trou d'évacuation d'un jet d'air à partir d'un volume intérieur de la cloche, le trou étant écarté du bord libre d'une distance supérieure à 2 cm.

Grâce à l'invention, le choc thermique produit par le jet d'air chaud détruit les mauvaises herbes. L'appareil ne nécessite donc pas l'emploi d'un gaz ou d'un liquide phytosanitaire. L'air chaud est dirigé uniquement sur les plantes indésirables, ce qui permet de ne pas détruire les plantes avoisinantes. L'appareil est pratique à utiliser puisqu'il est prêt à l'emploi et ne nécessite pas de manipulation préalable. L'appareil est respectueux de l'environnement car il ne rejette pas de gaz carbonique ni de déchets. La sécurité de l'appareil est optimale car il n'y a pas de flamme, ce qui supprime les risques d'explosion et les risques de fuite de gaz. L'appareil consomme peu d'énergie, ce qui rend son utilisation économique.

Selon des aspects avantageux mais non obligatoires de l'invention, un tel appareil de désherbage peut incorporer une ou plusieurs des caractéristiques suivantes, prises dans toute combinaison techniquement admissible :
- Le bord libre s'étend dans un plan incliné d'un angle, compris entre 1 ° et 30°, par rapport à un plan perpendiculaire à une direction d'un jet d'air chaud crée par le générateur thermique.
- Les jets d'air délimitent la surface latérale d'un cône dont le sommet est tourné du côté du bord libre de la cloche par rapport au générateur thermique, le cône s'évasant dans un sens allant du bord libre vers le générateur thermique.
- Un demi-angle au sommet du cône est compris entre 10° et 90°, de préférence compris entre 20 ° et 70 °.
- Les jets d'air délimitent la surface latérale d'un cône dont le sommet est tourné du côté du générateur thermique par rapport au du bord libre de la cloche, le cône s'évasant dans un sens allant du générateur thermique vers le bord libre.
- Un demi-angle au sommet du cône est supérieur à 60°.

L'invention concerne également un ensemble de désherbage manuel et localisé, comprenant un tel appareil et au moins une cloche supplémentaire qui est adaptable sur un corps du générateur thermique.

De manière avantageuse, chaque cloche a une géométrie différente.

L'invention concerne également un procédé de désherbage manuel et localisé selon la revendication 9, comprenant des étapes dans lesquelles :
- on crée un jet d'air chaud en faisant circuler de l'air au contact d'une résistance chauffante,
- par-dessus une mauvaise herbe, on pose une cloche qui comprend au moins un trou, avec un bord libre de la cloche en appui sur le sol, le trou étant écarté d'une distance supérieure à 2 cm du bord libre,
- on dirige le jet d'air chaud dans un volume intérieur de la cloche,
- le jet d'air chaud est évacué de la cloche sous la forme d'un jet secondaire passant par le trou.

De manière avantageuse, la température du jet d'air chaud est supérieure à 100 °C, de préférence supérieure à 400°C. L'invention sera mieux comprise et d'autres avantages de celle-ci apparaîtront plus clairement à la lumière de la description qui va suivre d'un appareil et d'un ensemble de désherbage manuel et localisé conforme à l'invention, donnée uniquement à titre d'exemple et faite en référence aux dessins annexés dans lesquels :
- la figure 1 est une vue en perspective d'un appareil de désherbage conforme à l'invention ;
- la figure 2 est une coupe selon le plan P2 à la figure 1 ;
- la figure 3 est une vue en perspective d'une cloche qui fait partie de l'appareil de la figure 1 ;
- la figure 4 est une vue semblable à la figure 3 d'une deuxième cloche qui fait partie d'un ensemble de désherbage comprenant l'appareil de la figure 1 ;
- la figure 5 est une vue de côté de la cloche de la figure 4 ;
- la figure 6 est une vue en perspective d'une troisième cloche appartenant à l'ensemble de désherbage ;
- la figure 7 est une vue semblable à la figure 2 montrant un corps de l'appareil équipé d'une quatrième cloche appartenant à l'ensemble de désherbage ;
- la figure 8 est une vue semblable à la figure 2 montrant un corps de l'appareil équipé d'une cinquième cloche appartenant à l'ensemble de désherbage.

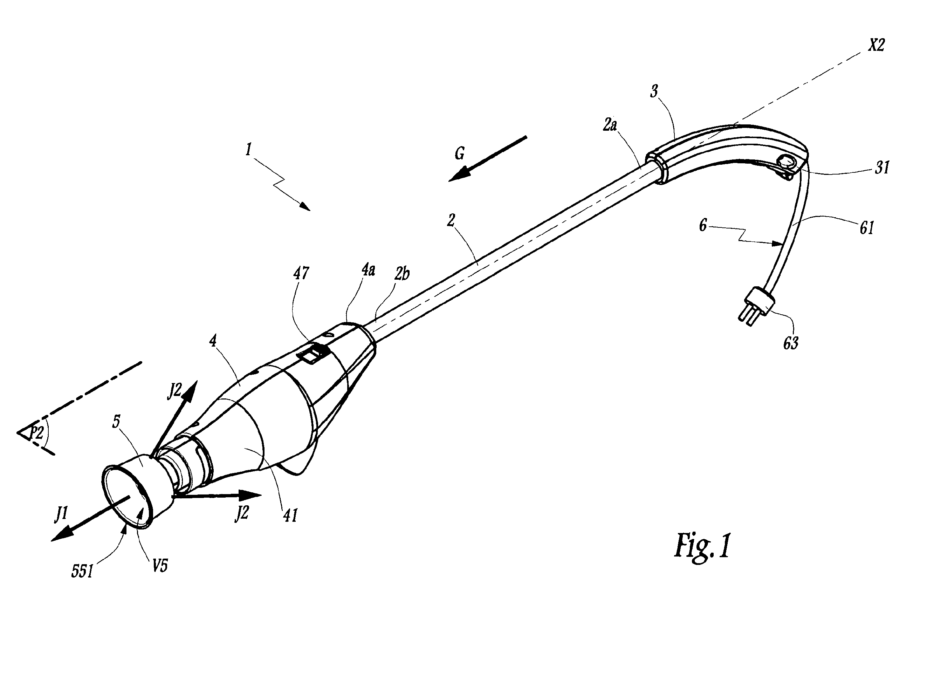

La figure 1 montre un appareil 1 de désherbage manuel et localisé qui comprend une canne 2 creuse, rectiligne et métallique, qui s'étend le long d'un axe longitudinal X2, une poignée 3 de préhension et un générateur thermique 4 qui, lors du fonctionnement de l'appareil 1, projette un jet d'air chaud J1 dans une cloche 5 prévue pour recouvrir une plante à détruire.

Dans la suite, on qualifie de « supérieurs » les éléments qui sont situés, le long de l'axe X2, du côté de la poignée 3. Les éléments dits «inférieurs » sont situés du côté de la cloche 5, le long de l'axe X2.

A la figure 1, on a représenté le champ de gravité terrestre G, qui définit la verticale. En service, l'axe X2 est placé parallèlement ou avec une légère inclinaison par rapport au champ G. La poignée 3 est alors située en haut par rapport à la cloche 5.

La poignée 3 est solidaire d'une extrémité supérieure 2a de la canne 2 et est légèrement incurvée par rapport à l'axe X2 pour faciliter la manipulation de l'appareil 1, lors de son utilisation. La poignée 3 est en matière plastique et un trou 31 débouchant est réalisé dans l'extrémité supérieure de la poignée. Le trou 31 permet de suspendre l'appareil 1 en vue de son stockage.

Une extrémité inférieure 2b de la canne 2 est fixée à une extrémité supérieure 4a d'un corps 41 du générateur thermique 4. Le corps 41 est en matière plastique et renferme des éléments prévus pour chauffer et projeter le jet d'air chaud J1, à une température T1 de l'ordre de 600°C. Selon l'invention, la température T1 est de préférence supérieure à 100°C, de préférence encore supérieure à 400°C.

Un interrupteur 47 de mise en marche et d'arrêt du générateur thermique 4 est prévu sur le corps 41.

En fonctionnement, le générateur thermique 4 est alimenté en énergie électrique par un réseau électrique de distribution, non représenté. A cet effet, l'appareil 1 comprend un câble 6 d'alimentation électrique terminé par une fiche électrique mâle 63. Le câble 6 comprend une portion supérieure 61, qui s'étend entre la prise 63 et la poignée 3, et une portion inférieure 62 qui passe à l'intérieur de la canne 2 et qui est connectée électriquement au générateur thermique 4.

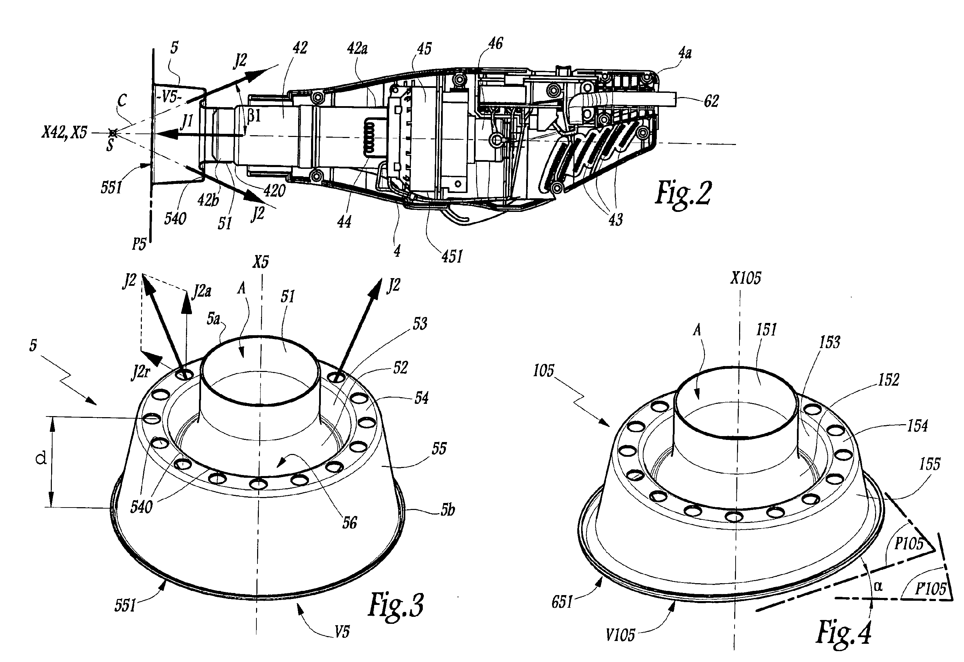

Comme le montre la figure 2, des ouvertures 43 d'entrée d'air extérieur sont réalisées dans le corps 41, à proximité de son extrémité supérieure 4a. Un ventilateur 45 est placé à l'intérieur du corps 41, du côté d'une extrémité inférieure 4b du corps 41 par rapport aux ouvertures 43. Le ventilateur 45 comprend une hélice qui n'est pas représentée à la figure 2 et qui est située à l'intérieur d'un carénage externe 451 du ventilateur 45. L'hélice est entrainée en rotation au moyen d'un moteur électrique 46 à courant continu, placé du côté de l'extrémité supérieure 4a par rapport au carénage 451 du ventilateur 45. Du côté de l'extrémité inférieure 4b, ce carénage est raccordé à une extrémité supérieure 42a d'un conduit 42 qui s'étend le long d'un axe longitudinal X42 globalement parallèle àl'axe X2 de la canne 2. Une extrémité inférieure 42b du conduit 42 dépasse à l'extérieur du corps 41. A l'intérieur du conduit 42, le générateur thermique 4 comprend une résistance chauffante 44. La résistance chauffante 44 est située du côté de l'extrémité inférieure 4b par rapport au ventilateur 45.

En fonctionnement, la résistance chauffante 44 et le ventilateur 45 sont alimentés en énergie électrique. Le ventilateur 45 crée une dépression qui aspire de l'air extérieur au corps 41. L'air extérieur passe alors par les ouvertures 43, est aspiré par l'hélice, au travers du carénage 451, et est projeté dans le conduit 42. L'air est alors chauffé par la résistance chauffante 44. Le jet d'air chaud J1 ainsi formé est projeté à l'extérieur du générateur thermique 4, au niveau de l'extrémité inférieure 42b du conduit 42 et selon la direction de l'axe X42 du conduit 42.

La cloche 5, représentée plus en détail à la figure 3, est montée de manière amovible sur l'extrémité inférieure 42b du conduit 42. La cloche 5 s'étend le long d'un axe X5. La cloche 5 est fabriquée à partir d'un matériau qui résiste à des températures supérieures à 600°C, de préférence supérieures à 900°C. Par exemple, la cloche 5 est en tôle d'acier ou d'aluminium. De préférence, la cloche 5 est en acier inoxydable pour éviter qu'elle ne rouille. Par exemple, la cloche 5 peut être fabriquée par emboutissage.

La géométrie de la cloche 5 est donnée uniquement à titre d'exemple. La cloche 5 comprend une partie de raccordement 51 qui a la géométrie d'un cylindre creux à section circulaire s'étendant le long de l'axe X5 et qui est prévue pour coopérer avec l'extrémité inférieure 42b du conduit 42 du générateur thermique 4. Plus précisément, comme le montre la figure 2, la cloche 5 est montée autour de l'extrémité inférieure 42b du conduit 42 et son extrémité supérieure 5a est en appui contre un épaulement 420 du conduit 42. Lorsque la cloche 5 est assemblée au corps 41, les axes X42 et X5 sont parallèles et confondus. La partie de raccordement 51 est située, le long de l'axe X5, au niveau d'une extrémité supérieure 5a de la cloche 5. On note 5b, une extrémité inférieure de la cloche 5, située à l'opposé de l'extrémité supérieure 5a.

La partie de raccordement 51 est prolongée, le long de l'axe X5 et du côté de l'extrémité inférieure 5b, par une portion évasée 52. La portion évasée 52 est prolongée vers l'extrémité supérieure 5a par une paroi radiale 53. Une paroi d'échappement 54 de forme annulaire, centrée sur l'axe X5, est raccordée à la paroi radiale 53. Plusieurs trous 540 espacés régulièrement sont réalisés dans la paroi d'échappement 54.Les trous 540 sont réalisés le long d'un contour circulaire d'axe X5. La paroi d'échappement 54 est prolongée vers l'extrémité inférieure 5b par une paroi latérale 55 tronconique à section circulaire dont l'extrémité de grand diamètre est située du côté de l'extrémité inférieure 5b de la cloche 5. Un bord inférieur 551 de la paroi latérale 55 est situé du côté de l'extrémité inférieure 5b de la cloche 5. Le bord inférieur 551 est un bord libre qui s'étend dans un plan P5 perpendiculaire à l'axe X5.

On note V5, un volume interne de la cloche 5. La partie de raccordement 51 définit, au niveau de l'extrémité supérieure 5a de la cloche 5, une ouverture A d'entrée du jet d'air chaud J1 dans le volume intérieur V5 de la cloche 5.

Une rainure externe annulaire 56 est délimitée par la portion évasée 52 et par la paroi radiale 53. La rainure externe 56 s'étend à l'extérieur du volume V5. Selon un axe radial, c'est-à-dire un axe perpendiculaire à l'axe X5 et passant par l'axe X5, la rainure externe 56 est située entre la partie de raccordement 51 et la paroi d'échappement 54.

Le fonctionnement de l'appareil 1 est le suivant. L'utilisateur monte la cloche 5 sur le conduit 42 et branche la fiche 63 à un réseau électrique. Si besoin, on peut utiliser une rallonge électrique. Puis, l'utilisateur pousse l'interrupteur 47 pour mettre en marche l'appareil 1 et saisit la poignée 3. L'utilisateur place la cloche 5 par-dessus une mauvaise herbe qu'il souhaite détruire. La longueur de la canne 2 permet à l'utilisateur de rester debout. La mauvaise herbe est alors confinée dans le volume intérieur V5 de la cloche 5. Le générateur thermique 4 projette le jet d'air chaud J1 dans le volume intérieur V5 de la cloche 5. Le jet d'air chaud J1 est projeté vers l'avant, c'est-à-dire dans un sens allant du générateur thermique 4 et de l'ouverture A vers le bord libre 551 de la cloche 5. Le jet d'air chaud J1 chauffe la mauvaise herbe, ce qui la détruit en quelques secondes. Le jet d'air chaud J1 entre en contact avec la mauvaise herbe et est évacué automatiquement du volume intérieur V5 de la cloche 5 par les trous 540, sous la forme de plusieurs jets secondaires J2 représentés aux figures 1 à 3. Dans l'exemple des figures 1 et 2, les jets secondaires J2 sont projetés vers l'arrière, c'est-à-dire dans un sens allant du bord libre 551 vers l'ouverture A de la cloche 5.

La direction des jets secondaires J2 est conditionnée par la géométrie de la paroi d'échappement 54 et des ouvertures 540. Dans le cadre de l'invention, comme expliqué plus en détail par la suite, cette direction peut varier.

Comme le montre la figure 3, les jets secondaires J2 présentent une composante axiale J2a et une composante radiale J2r, définies en référence à l'axe X42 du jet d'air chaud J1. La composante axiale J2a est parallèle à l'axe X42 du jet d'air chaud J1 et est dirigée de bas en haut, c'est-à-dire vers l'arrière ou de la cloche 5 vers la poignée 3. La composante radiale J2r coupe l'axe X42 et est dirigée vers l'extérieur de l'appareil 1. En variante, la composante radiale J2r ou axiale J2a peut être nulle. Ici, le sens de la composante axiale J2a est opposé au sens du jet d'air chaud J1.

Les jets secondaires J2 sont ainsi évacués globalement vers le haut ou vers l'arrière, c'est-à-dire à l'opposé du sol, selon une direction légèrement inclinée par rapport à l'axe X42. En d'autres termes, les jets secondaires J2 ont une direction parallèle ou légèrement inclinée, vers l'extérieur de l'appareil 1, par rapport au champ de gravité terrestre G. Les jets secondaires J2 sont ainsi évacués de la cloche 5, à l'opposé de la cloche 5, selon une direction parallèle ou légèrement inclinée par rapport à l'axe X42 du jet d'air chaud J1.

Les jets J2 délimitent la surface latérale d'un cône C1 dont le sommet S1 est tourné vers l'avant, c'est-à-dire du côté du bord libre 551 par rapport à l'ouverture A de la cloche 5. Dans l'exemple des figures 1 et 2, l'axe X42 est l'axe de révolution du cône C1.

Le cône C1 s'élargit vers l'arrière, c'est à dire dans une sens allant du bord libre 551 vers l'ouverture A de la cloche 5 et le générateur thermique 4. Pour chaque jet secondaire J2, on définit un angle β1 qui est le demi-angle au sommet du cône C1. De préférence, l'angle β1 est compris entre 10° et 90 °, de préférence encore entre 20° et 70 °.

De cette manière, les plantes voisines de la mauvaise herbe à détruire ne risquent pas d'être détériorées. Les jets J2 sont évacués de la cloche 5 radialement, de manière à ne pas être dirigés vers le corps 41 du générateur thermique 4, ce qui permet d'éviter la surchauffe du générateur thermique 4.

Le bord 551 de la cloche 5 est en appui sur le sol, ce qui facilite le positionnement de l'appareil 1 par rapport à la mauvaise herbe.

La section intérieure de l'extrémité inférieure 42b du conduit 41 est supérieure ou égale à la somme des sections des trous 540. En d'autres termes, la somme des sections des jets secondaires J2 est inférieure ou égale à la section du jet d'air chaud J1. De cette manière, une légère surpression est créée dans le volume intérieur V5 de la cloche 5, ce qui favorise la destruction de la mauvaise herbe sans surchauffer la résistance chauffante 44. En effet, une surchauffe de la résistance chauffante 44 pourrait l'endommager.

En alternative, il n'y a pas de surpression et la somme des sections des jets secondaires J2 est supérieure ou égale à la section du jet d'air chaud J1. Dans cette variante, la somme des sections des jets secondaires J2 est supérieure ou égale à la section du jet d'air chaud J1.

Plusieurs alternatives permettent d'évacuer les jets J2 vers l'arrière, à l'opposé du bord libre 551. Par exemple, les trous 540 peuvent être percés en biais par rapport à l'axe X5 ou des tuyères inclinées peuvent être formées au niveau de chaque trou 540, par exemple par emboutissage.

La géométrie des cloches 5, 105, 205, 305 et 405 représentées sur les figures est donnée uniquement à titre d'exemple. Selon l'invention, les cloches 5, 105, 205, 305 et 405 peuvent avoir d'autres géométries, dans la mesure où la paroi d'échappement et les trous de passage des jets secondaires J2 sont conçus de sorte que les jets secondaires J2 sont évacués à partir du volume intérieur de la cloche, avec une distance d entre le bord libre et les trous d'échappement supérieure à 2 cm. La paroi d'échappement de la cloche peut être par exemple conique ou hémisphérique.

Un procédé de désherbage conforme à l'invention comprend des étapes dans lesquelles :
- par-dessus une mauvaise herbe, on pose une cloche 5, avec le bord libre 551 de la cloche 5 en appui sur le sol ; la mauvaise herbe se trouve alors dans le volume intérieur V5 de la cloche 5,
- on dirige le jet d'air chaud J1 dans le volume intérieur V5 de la cloche 5,
- le jet d'air chaud J1 est évacué de la cloche 5 par chaque trou 540, chaque trou 540 étant écarté du bord libre 551 d'une distance d supérieure à 2 cm. De manière facultative, le jet d'air chaud J1 est évacué à l'opposé du bord libre 551 de la cloche 5, selon une direction globalement opposée à la direction du jet d'air chaud J1.

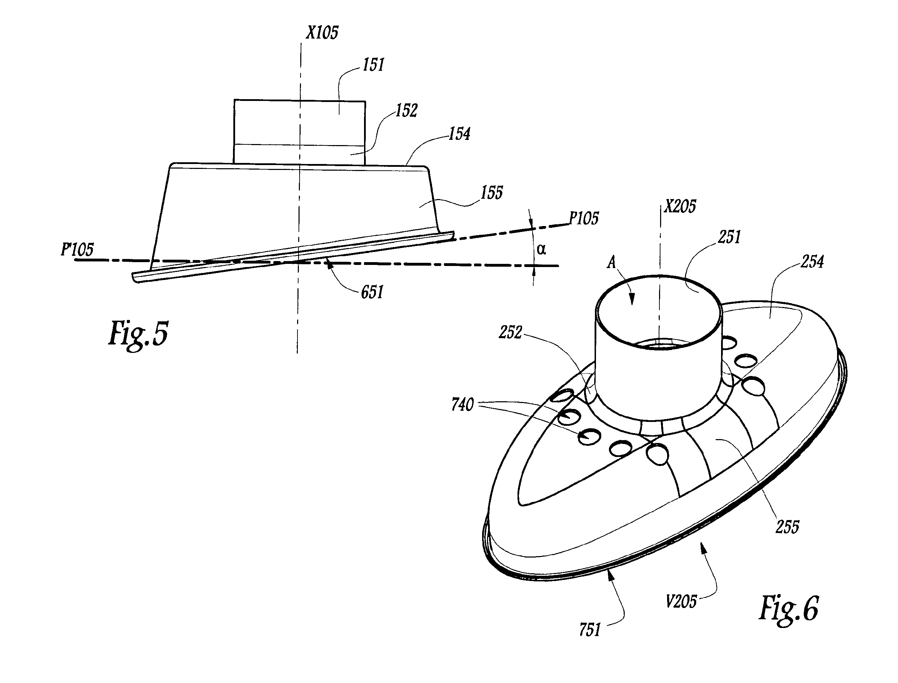

Les figures 4 et 5 montrent une deuxième cloche 105 d'axe X105, qui est quasiment identique à la première cloche 5 et qui définit un volume interne V105. Les éléments de la deuxième cloche 105 similaires à ceux de la première cloche 5 portent les mêmes références numériques, augmentées de 100. Ainsi, la cloche 105 comprend une partie de raccordement 151, une portion évasée 152, une paroi radiale 153, une paroi d'échappement 154, dans laquelle sont réalisés des trous 640, et une paroi latérale 155. Un bord inférieur 651 de la paroi latérale 155 s'étend dans un plan P105 qui est légèrement incliné d'un angle α non nul par rapport à un plan P'105 perpendiculaire à l'axe X105. L'angle α est compris entre 1 ° et 30°. Cette inclinaison facilite l'utilisation de l'appareil 1, en particulier lorsque l'utilisateur se déplace en avançant.

La figure 6 montre une troisième cloche 205 qui s'étend le long d'un axe X205. La cloche 205 est globalement analogue aux cloches 5 et 105 mais définit un volume interne V205 de forme allongée. Les éléments de la cloche 205 similaires à ceux de la cloche 5 portent les mêmes références numériques, augmentées de 200. Ainsi, la cloche 205 comprend une partie de raccordement 251, une portion évasée 252, une paroi d'échappement 254 et une paroi latérale 255. La paroi d'échappement 254 est perpendiculaire à l'axe X205. Des trous 740 analogues aux trous 540 de la cloche 5 sont réalisés dans paroi d'échappement 254. Un bord inférieur 751 de la paroi latérale 255 est de forme oblongue allongée et s'étend dans un plan perpendiculaire à l'axe X205. En alternative, le bord inférieur 751 s'étend dans un plan incliné par rapport à un plan perpendiculaire à l'axe X205, comme expliqué en référence à la cloche 105.

La forme allongée du volume intérieur V205 de la cloche 205 est adaptée pour détruire des plantes qui poussent, par exemple, entre les carreaux d'une terrasse.

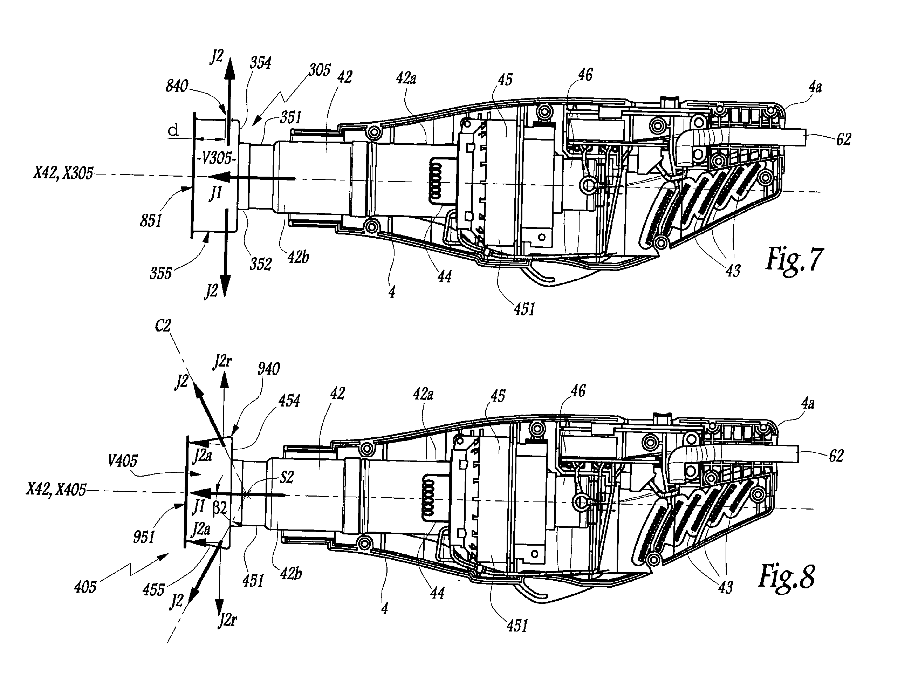

La figure 7 montre une quatrième cloche 305 qui s'étend le long d'un axe X305. La cloche 305 est globalement analogue aux cloches 5, 105 et 205 mais la géométrie de la cloche 305 est définie de sorte que les jets secondaires J2 s'échappent uniquement radialement par des trous 840. Les éléments de la cloche 305 similaires à ceux de la cloche 5 portent les mêmes références numériques, augmentées de 300. Ainsi, la cloche 305 comprend une partie de raccordement 351, une portion évasée 352, une paroi supérieure 354 et une paroi latérale 355 radiale. La paroi latérale 355 a la forme de la paroi latérale d'un cylindre d'axe X305. Des trous 840 sont réalisés dans la paroi radiale 355. Pour chaque jet secondaire J2, la composante axiale J2a est nulle. Les jets secondaires J2 sont dirigés vers l'extérieur de l'appareil 1. Pour éviter de détruire les plantes avoisinantes lors du fonctionnement de l'appareil 1, chaque trou d'échappement 840 est écarté d'une distance d supérieure à 2 cm d'un bord libre 851 de la cloche 305. En sortant du volume intérieur V305 la cloche 305, les jets secondaires J2 entrainent par effet Venturi de l'air extérieur à température ambiante, refroidissant ainsi les jets secondaires J2. Par conséquent, la température des jets secondaires J2, en sortie de la cloche 305, n'est pas dangereuse pour l'utilisateur et n'est pas de nature à détruire les plantes avoisinantes.

La figure 8 montre une cinquième cloche 405 qui s'étend le long d'un axe X405 et délimite un volume intérieur V405. La cloche 405 est globalement analogue aux cloches 5, 105, 205 et 305 mais la géométrie de la cloche 405 est définie de sorte que la composante axiale J2a des jets secondaires J2 est dirigée vers l'avant, dans le même sens que le jet d'air chaud J1, c'est-à-dire du générateur thermique 4 vers la cloche 405, autrement dit, de l'ouverture A vers le bord libre 951 de la cloche 405. Dans ce cas, la composante radiale J2r est non nulle. Les éléments de la cloche 405 similaires à ceux de la cloche 5 portent les mêmes références numériques, augmentées de 400. Ainsi, la cloche 405 comprend une partie de raccordement 451, une paroi supérieure 454 et une paroi latérale 455. Par exemple, la paroi latérale 455 a la forme d'un cône dont le sommet est tourné du côté du bord libre 951 par rapport à l'ouverture A de la cloche 405. Des trous 940 sont réalisés dans paroi latérale 455. Pour éviter de détruire les plantes avoisinantes, chaque trou d'échappement 940 est écarté d'une distance d supérieure à 2 cm du bord libre 951 de la cloche 405. Les jets secondaires J2 sont dirigés vers l'extérieur de l'appareil 1. Dans cette variante, la géométrie de la cloche 405 est définie de sorte que jets secondaires J2 délimitent la surface latérale d'un cône C2 dont le sommet S2 est tourné du côté du générateur thermique 4 par rapport au du bord libre 951 de la cloche 405. Le cône C2 s'évase ainsi dans un sens allant du générateur thermique 4 vers le bord libre 951. De préférence, un demi-angle au sommet β2 de ce cône C2 est supérieur à 60 °.

Dans une autre variante non représentée, la cloche définit un volume interne hémisphérique et comprend, d'une part, une partie de raccordement qui s'étend le long d'un axe longitudinal de la cloche, coïncidant avec la direction du jet d'air chaud. Cette partie de raccordement est prolongée du côté du bord libre circulaire de la cloche par une paroi hémisphérique. Les trous d'échappement des jets secondaires sont réalisés dans la paroi hémisphérique. Selon leur position, les jets secondaires sont évacués dans des directions différentes. En particulier, on pourra réaliser les trous de sorte que les jets secondaires sont évacués du volume intérieur selon une direction formant un angle d'environ 45° avec la direction du jet d'air chaud J1.

L'appareil 1 équipé de sa cloche 5 et les cloches supplémentaires 105, 205, 305 et 405 font partie d'un ensemble de désherbage. L'utilisateur peut ainsi choisir une cloche adaptée à ses besoins.

En variante non représentée, l'ensemble de désherbage comprend un nombre de cloches supplémentaires supérieur à quatre, pouvant avoir des géométries diverses adaptées à des applications variées.

En variantes, les trous 540, 640, 740, 840 et 940 ne sont pas circulaires. Il peut s'agir de fentes ou de grilles.

Les variantes décrites dans la présente description peuvent être combinées entre elles, totalement ou partiellement.

## Revendications

1. Appareil (1) de désherbage manuel et localisé comprenant un générateur thermique (4) fixé à une canne (2), le générateur thermique (4) comprenant un ventilateur (45) et une résistance chauffante (44) et projettant un jet d'air chaud (J1) dans un volume intérieur (V5 ; V105 ; V205 ; V305 ; V405) d'une cloche (5 ; 105 ; 205 ; 305 ; 405) pourvue d'un bord libre (551 ; 651 ; 751 ; 851 ; 951) pour l'appui de l'appareil (1) sur le sol, **caractérisé en ce que** la cloche (5 ; 105 ; 205 ; 305 ; 405) est pourvue d'au moins un trou (540 ; 640 ; 740 ; 840 ; 940) d'évacuation d'un jet d'air (J2) à partir du volume intérieur (V5 ; V105 ; V205 ; V305 ; V405) de la cloche (5 ; 105 ; 205 ; 305 ; 405) et **en ce que** le trou (540 ; 640 ; 740 ; 840 ; 940) est écarté du bord libre (551 ; 651 ; 751 ; 851 ; 951) d'une distance (d) supérieure à 2 cm.

2. Appareil (1) selon la revendication 1, **caractérisé en ce que** le bord libre (651) s'étend dans un plan (P105) incliné d'un angle (α), compris entre 1 ° et 30°, par rapport à un plan (P'105) perpendiculaire à une direction (X42) du jet d'air chaud (J1).

3. Appareil (1) selon l'une des revendications précédentes, **caractérisé en ce que** les jets d'air (J2) délimitent la surface latérale d'un cône (C1) dont le sommet (S1) est tourné du côté du bord libre (551 ; 651 ; 751) de la cloche (5 ; 105 ; 205) par rapport au générateur thermique (4), le cône (C1) s'évasant dans un sens allant du bord libre (551 ; 651 ; 751) vers le générateur thermique (4).

4. Appareil (1) selon la revendication 3, **caractérisé en ce qu'**un demi-angle (β1) au sommet (S1) du cône (C1) est compris entre 10° et 90°, de préférence compris entre 20° et 70°.

5. Appareil (1) selon l'une des revendications 1 ou 2, **caractérisé en ce que** les jets d'air (J2) délimitent la surface latérale d'un cône (C2) dont le sommet (S2) est tourné du côté du générateur thermique (4) par rapport au bord libre (951) de la cloche (305), le cône (C2) s'évasant dans un sens allant du générateur thermique (4) vers le bord libre (951).

6. Appareil (1) selon la revendication 5, **caractérisé en ce qu'**un demi-angle (β2) au sommet du cône (C2) est supérieur à 60°.

7. Ensemble de désherbage manuel et localisé, **caractérisé en ce qu'**il comprend un appareil (1) selon l'une des revendications précédentes et au moins une cloche (105, 205, 305, 405) supplémentaire qui est adaptable sur un corps (41) du générateur thermique (4).

8. Ensemble selon la revendication 7, **caractérisé en ce que** chaque cloche (5, 105, 205, 305, 405) a une géométrie différente.

9. Procédé de désherbage manuel et localisé, **caractérisé en ce qu'**il comprend des étapes dans lesquelles :
- on crée un jet d'air chaud (J1) en faisant circuler de l'air au contact d'une résistance chauffante (44),
- par-dessus une mauvaise herbe, on pose une cloche (5 ; 105 ; 205 ; 305 ; 405) qui comprend au moins un trou (540 ; 640 ; 740 ; 840 ; 940), avec un bord libre (551 ; 651 ; 751 ; 851 ; 951) de la cloche (5 ; 105 ; 205 ; 305 ; 405) en appui sur le sol, le trou (540 ; 640 ; 740 ; 840 ; 940) étant écarté d'une distance (d) supérieure à 2 cm du bord libre (551 ; 651 ; 751 ; 851 ; 951),
- on dirige le jet d'air chaud (J1) dans un volume intérieur (V5 ; V105 ; V205 ; V305 ; V405) de la cloche (5 ; 105 ; 205 ; 305 ; 405),
- le jet d'air chaud (J1) est évacué de la cloche (5, 105, 205, 305, 405) sous la forme d'un jet secondaire (J2) passant par le trou (540 ; 640 ; 740 ; 840 ; 940).

10. Procédé selon la revendication 9, **caractérisé en ce que** la température du jet d'air chaud (J1) est supérieure à 100°C, de préférence supérieure à 400 °C.

## Patentansprüche

1. Gerät (1) zur manuellen und lokalen Unkrautbekämpfung mit einem an einem Stab (2) befestigten Wärmeerzeuger (4), wobei der Wärmeerzeuger (4) ein Gebläse (45) und einen Heizwiderstand (44) aufweist und einen Heißluftstrahl (J1) in einen Innenraum (V5, V105; V205; V305; V405) einer Glocke (5; 105; 205; 305; 405) injiziert, die zur Abstützung des Gerätes (1) auf dem Boden mit einem freien Rand (5 51; 651; 751; 851; 951) versehen ist,
**dadurch gekennzeichnet,**
**dass** die Glocke (5; 105; 205; 305; 405) zumindest mit einer Austrittsöffnung (540; 640; 740; 840; 940) für einen Luftstrahl (J2) aus dem Innenraum (V5, V105; V205; V305; V405) der Glocke (5; 105; 205; 305; 405) versehen ist,
und **dass** die Öffnung (540; 640; 740; 840; 940) von dem freien Rand (551; 651; 751; 851; 951) einen Abstand (d) von mehr als 2 cm aufweist.

2. Gerät (1) nach Anspruch 1,
**dadurch gekennzeichnet,**
**dass** der freie Rand (651) sich in einer Ebene (P 105) erstreckt, die unter einem Winkel (α), der zwischen 1° und 30° liegt, gegenüber einer Ebene (P'105) verläuft, die senkrecht zu der Richtung (X42) des Heißluftstrahls (J1) steht.

3. Gerät (1) nach einem der vorhergehenden Ansprüche,
**dadurch gekennzeichnet,**
**dass** die Luftstrahlen (J2) die Seitenfläche eines Kegels (C1) begrenzen, dessen Spitze (S1) von der Seite des freien Randes (551; 651; 751) der Glocke (5; 105; 205) zu dem Wärmeerzeuger (4) gewendet ist, wobei sich der Kegel (C1) in der Richtung von dem freien Rand (551; 651; 751) zu dem Wärmeerzeuger (4) aufweitet.

4. Gerät (1) nach Anspruch 3,
**dadurch gekennzeichnet,**
**dass** ein Halbwinkel (β1) an der Spitze (S1) des Kegels (C1) zwischen 10° und 90°, vorzugsweise zwischen 20° und 70°, liegt.

5. Gerät (1) nach einem der Ansprüche 1 oder 2,
**dadurch gekennzeichnet,**
**dass** die Luftstrahlen (J2) die Seitenfläche eines Kegels (C2) begrenzen, dessen Spitze (S2) von der Seite des Wärmeerzeugers (4) zu dem freien Rand (951) der Glocke (305) des Kegels (C2) gewendet ist, wobei sich der Kegel (C2) in einer Richtung von dem Wärmeerzeuger (4) zu dem freien Rand (951) aufweitet.

6. Gerät (1) nach Anspruch 5,
**dadurch gekennzeichnet,**
**dass** ein Halbwinkel (β2) an der Spitze des Kegels (C2) mehr als 60° beträgt.

7. Einrichtung zur manuellen und lokalen Unkrautbekämpfung,
**dadurch gekennzeichnet,**
**dass** sie ein Gerät (1) nach einem der vorhergehenden Ansprüche und mindestens eine zusätzliche Glocke (105; 205; 305; 405) aufweist, die an einen Körper (41) des Wärmeerzeugers (4) angepasst werden kann.

8. Einheit nach Anspruch 7,
**dadurch gekennzeichnet,**
**dass** jede Glocke (5; 105; 205; 305; 405) eine andere Geometrie aufweist.

9. Verfahren zur manuellen und lokalen Unkrautbekämpfung,
**dadurch gekennzeichnet,**
**dass** es folgende Schritte aufweist, in denen:
- man einen Heißluftstrahl (J1) erzeugt, indem man Luft in Kontakt mit einem Heizwiderstand (44) zirkulieren lässt,
- man oberhalb von Unkraut eine Glocke (5; 105; 205; 305; 405) anordnet, die mindestens eine Öffnung (540; 640; 740; 840; 940) aufweist, wobei ein freier Rand (551; 651; 751; 851; 951) der Glocke (5; 105; 205; 305; 405) sich auf dem Boden abstützt, wobei die Öffnung (540; 640; 740; 840; 940) einen Abstand (d) von mehr als 2 cm von dem freien Rand (551; 651; 751; 851; 951) aufweist,
- man den Heißluftstrahl (J1) in einen Innenraum (V5, V105; V205; V305; V405) der Glocke (5; 105; 205; 305; 405) lenkt, und
- man den Heißluftstrahl (J1) in Form eines zweiten Strahls (J2), der durch die Öffnung (540; 640; 740; 840; 940) hindurchgeht, aus der Glocke (5; 105; 205; 305; 405) austreten lässt.

10. Verfahren nach Anspruch 9,
**dadurch gekennzeichnet,**
**dass** die Temperatur des Heißluftstrahls (J1) mehr als 100 °C, vorzugsweise mehr als 400 °C, beträgt.

## Claims

1. A manual and localized weeding apparatus (1) comprising a heat generator (4) attached to a rod (2), the heat generator (4) comprising a fan (45) and a heating resistor (44) and projecting a hot air jet (J1) into an inner volume (V5; V105; V205; V305; V405) of a bell (5; 105; 205; 305; 405) provided with a free end (551; 651; 751; 851; 951) for supporting the apparatus (1) on the ground, **characterized in that** the bell (5; 105; 205; 305; 405) is provided with at least one hole (540; 640; 740; 840; 940) for discharging an air jet (J2) from the inner volume (V5; V105; V205; V305; V405) of the bell (5; 105; 205; 305; 405) and **in that** the hole (540; 640; 740; 840; 940) is separated from the free edge (551; 651; 751; 851; 951) by a distance (d) of more than 2 cm.

2. The apparatus (1) according to claim 1, **characterized in that** the free edge (651) extends in a plane (P105) tilted by an angle (α), comprised between 1° and 30°, relatively to a plane (P'105) perpendicular to a direction (X42) of the hot air jet (J1).

3. The apparatus (1) according to one of the preceding claims, **characterized in that** the air jets (J2) delimit the side surface of a cone (C1), the apex (S1) of which is turned towards the side of the free edge (551; 651; 751) of the bell (5; 105; 205) relatively to the heat generator (4), the cone (C1) being flared in a direction from the free edge (551; 651; 751) towards the heat generator (4).

4. The apparatus (1) according to claim 3, **characterized in that** a half angle (β1) at the apex (S1) of the cone (C1) is comprised between 10° and 90°, preferably comprised between 20° and 70°.

5. The apparatus (1) according to one of claims 1 or 2, **characterized in that** the air jets (J2) delimit the side surface of a cone (C2), the apex (S2) of which is turned towards the side of the heat generator (4) relatively to the free edge (951) of the bell (305), the cone (C2) being flared in a direction from the heat generator (4) towards the free edge (951).

6. The apparatus (1) according to claim 5, **characterized in that** a half angle (β2) at the apex of the cone (C2) is greater than 60°.

7. A manual and localized weeding assembly, **characterized in that** it comprises an apparatus (1) according to one of the preceding claims and at least one additional bell (105, 205, 305, 405) which is able to be adapted on a body (41) of the heat generator (4).

8. The assembly according to claim 7, **characterized in that** each bell (5, 105, 205, 305, 405) has a different geometry.

9. A manual and localized weeding method, **characterized in that** it comprises steps wherein:
- a hot air jet (J1) is generated by circulating air in contact with a heating resistor (44),
- over a weed, a bell (5; 105; 205; 305; 405) is laid, which comprises at least one hole (540; 640; 740; 840; 940), with a free edge (551; 651; 751; 851; 951) of the bell (5; 105; 205; 305; 405) bearing upon the ground, the hole (540; 640; 740; 840; 940) being separated from the free edge (551; 651; 751; 851; 951) by a distance (d) of more than 2 cm,
- the hot air jet (J1) is directed into an inner volume (V5; V105; V205; V305; V405) of the bell (5; 105; 205; 305; 405),
- the hot air jet (J1) is discharged from the bell (5, 105, 205, 305, 405) in the form of a secondary jet (J2) passing through the hole (540; 640; 740; 840; 940).

10. The method according to claim 9, **characterized in that** the temperature of the hot air jet (J1) is above 100°C, preferably above 400°C.
